# EUROPEAN PATENT SPECIFICATION

(11) **EP 1 744 626 B1**
(45) Date of publication and mention of the grant of the patent: **03.08.2011**
(21) Application number: 05749378.5
(22) Date of filing: 09.05.2005
(51) Int. Cl.: A01N 27/00, A01N 49/00, A01N 51/00, A01N 47/38, A01N 47/34, A01N 47/02, A01N 43/56, A01N 43/36, A01N 43/22

(54) **METHOD TO FIGHT AGAINST INSECTS INCLUDING THE USE OF HYDROCARBON COMPOUNDS**
INSEKTENBEKÄMPFUNGSVERFAHREN EINSCHLIESSLICH DER VERWENDUNG VON KOHLENWASSERSTOFFVERBINDUNGEN
PROCEDE DE LUTTE CONTRE LES INSECTES FAISANT APPEL A DES COMPOSES HYDROCARBONES

(30) Priority: 11.05.2004 EP 04356066
(43) Date of publication of application: 24.01.2007
(73) Proprietor: Bayer SAS, 69009 Lyon (FR); Centre National de la Recherche Scientifique (C.N.R.S), 75016 Paris (FR)
(72) Inventor: BAGNERES, Anne-Genevieve, F-37000 Tours (FR); CLEMENT, Jean-Luc CNRS Meudon Bellevue, F-92190 Meudon (FR); IZZO, Sandrine 27, rue Marie-Louise, Bâtiment A1 F-13008 Marseille (FR); DAVIES, Lorna, 40489 Dusseldorf (DE); HOPE, Joe, Harold 7106 Hebron Church Road, Mebane, NC 27302 (US)
(74) Representative: Nowak, Alexander
(86) International application number: PCT/EP2005/006050
(87) International publication number: WO 2005/107459

(56) References cited:
- EP-A- 0 203 413
- WO-A-93/24011
- US-A- 4 205 066
- US-A- 6 093 415
- BAGNERES A.-G: "Interspecific recognition among termites of the genus Reticulitermes: evidence for a rle for the cuticular hydrocarbons" JOURNAL OF CHEMICAL ENTOMOLOGY, vol. 17, no. 12, 1991, pages 2397-2420, XP009034186 cited in the application
- PATENT ABSTRACTS OF JAPAN vol. 012, no. 312 (C-523), 24 August 1988 (1988-08-24) & JP 63 083002 A (SHINTO PAINT CO LTD), 13 April 1988 (1988-04-13)
- BROWN W.V.: "A chemotaxonomic Survey using Cuticular Hydrocarbons of some species of the Australian Harvester Termite Genus Drepanotermes (Isoptera Termitidae)" SOCIOBIOLOGY, vol. 27, no. 2, 1996, pages 191-221, XP009034274
- KAIB M.: "Cuticular Hydrocarbons in a termite: phenotypes and a neighbour stranger effect" PHYSIOLOGICAL ENTOMOLOGY, vol. 27, September 2002 (2002-09), pages 189-198, XP002289471

## Description

The present invention relates to a method to fight against termites comprising the use of hydrocarbon compounds, as well as an insecticide composition comprising a mixture of such hydrocarbon compounds and a method of treatment of termites by using these insecticide compositions.

Insects, and more particularly gregarious, social, and sub-social insects, use the hydrocarbons that cover their exoskeleton for recognition between species, but also between members of the same specie. These hydrocarbon compounds are perceived on contact by the insects and affect their behavior. They constitute their chemical signature and induce various social behaviors such as, for example, gathering in colonies or transportation of eggs and young larvae.

The role played by the hydrocarbon compounds covering the exoskeleton of insects in mechanisms of interspecies and intraspecies recognition is described in a 1991 article taken from the Journal of Chemical Ecology, vol. 17, 1191, pages 2397 to 2419*,* especially in the first two paragraphs on page 2398. The use of lures covered with different extracts of hydrocarbon compounds to study the reactions and the behaviors of the species is disclosed. This document does not disclose any association of hydrocarbon compounds with insecticide active ingredients neither it discloses the use of hydrocarbon compounds for fighting against insects.

The use of certain toxins, in the form of baits for example, to fight against social or sub-social insects is well known to the specialists. For example, patent applications EP 0203413 and US 4,205,066 disclose the use of bait comprising hydrocarbon derivatives to attract and fight respectively against wasps and flies. Nests of wasps and flies are small and contain only a few individuals. The spread of the toxin between the different members of the colony, including the members living in the nest, is generally not a problem for such species. Nevertheless, nests of termites, ants, cockroaches, earwigs and locusts are different : they can contain several thousands and sometime even several millions of individuals and are generally very extensive. This is for example the case of subterranean termite nests which can contain several thousand of individuals, sometime several millions. The nest is generally diffused and can also contain several satellite nests with secondary reproductive. Links between parts of the nest are made by galleries being able to length several dozen of meters in which contacts occur between congeners. The use of the type of bait as described in patent applications EP 0203413 and US 4,205,066 to fight against termites, ants, cockroaches, earwigs and locusts therefore presents the drawback in that it is impossible to affect the entire colony, and especially the part of the colony living in the nest. The toxin generally affects only part of the target insect population that consumes the bait and thus directly ingests the toxin.

Surprisingly, it has now been discovered that the use of particular hydrocarbon compounds or a mixture of them can considerably improve the efficacy of the toxins used to combat termites, since they allow better absorption and adsorption of the toxin by the insects that consume it directly, as well as its good diffusion among the various members of the colony, including the members of the colony living in the nest. The use of such compounds also reduces the quantity of toxin used and, if bait is used, the number of baits placed, which represents, among other advantages, a reduction in treatment cost, as well as a reduction in the spreading of the materials in the environment.

Consequently, the object of this invention is a method of lighting against termites, comprising the use of a mixture of hydrocarbon compounds chosen among alkanes and alkenes comprising from 20 to 40 carbon atoms.

In the context of the present invention, the terms alkanes and alkenes cover linear as well as branched compounds.

The use of hydrocarbon compound mixtures according to this invention allows obtaining an "arresting" effect on the termites meaning that when the mixture of hydrocarbon compounds is perceived on contact or at a short distance by the insect, the insect is attracted by the mixture which induces an arresting behavior in the insect or limits its movements to the place where the mixture was deposited. A termite which has perceived a hydrocarbon compound mixture according to this invention will have the tendency to remain in contact with said mixture for a long time. In addition, a termite which has consumed or transported such a mixture will see its contacts with other insects of the same species increase, thus improving the distribution of the mixture between the different members of the colony.

This invention relates to a method of fighting against termites, comprising the use of alkanes or alkenes comprising from 20 to 40 carbon atoms. Preferably, the alkanes or alkenes used comprise from 23 to 35 carbon atoms. More preferably, the alkanes and alkenes used comprise from 25 to 27 carbon atoms. Even more preferably, the alkanes and alkenes used are chosen from the group comprising 11-methyltetracosane, 5-methylpentacosane, 11-methylpentacosane, (Z)-9-pentacosene, n-pentacosane, n-hexacasaoe, 5,17-dimethylpentacosane, and 5-methyltetracosane.

A preferred hydrocarbon compound mixture to be used in the method according to the present invention comprises 11-methylpentacosane, (Z)-9-pentacosene, and n-pentacosane (mixture A). More preferably, the following mixture is used (mixture A-1) :
- 11-methylpentacosane in a proportion ranging from 36 to 51% in weight;
- (Z)-9-pentacosene in a proportion ranging from 16 to 31% in weight; and
- n-pentacosane in a proportion ranging from 26 to 41% in weight.

Even more preferably, the following mixture is used (mixture A-2) :
- 11-methylpentacosane in a proportion ranging from 41 to 46% in weight;
- (Z)-9-pentacosene in a proportion ranging from 21 to 26% in weight; and
- n-pentacosane in a proportion ranging from 31 to 35% in weight.

Another preferred hydrocarbon mixture to be used in the method according to the present invention comprises 5-methylpentacosane, 11-methylpentacosane, (Z)-9-pentacosene, n-pentacosane, and n-hexacosane (mixture B). More preferably, the following mixture is used (mixture B-1):
- 5-methylpentacosane in a proportion ranging from 4 to 19% in weight;
- 11-methylpentacosane in a proportion ranging from 29 to 43% in weight;
- (Z)-9-pentacosene in a proportion ranging from 12 to 27% in weight;
- n-pentacosane in a proportion ranging from 20 to 35% in weight; and
- n-hexacosane in a proportion ranging from 1 to 10% in weight.

Even more preferably, the following mixture is used (mixture B-2):
- 5-methylpentacosane in a proportion ranging from 9 to 14% in weight;
- 11-methylpentacosane in a proportion ranging from 34 to 38% in weight;
- (Z)-9-pentacosene in a proportion ranging from 17 to 22% in weight;
- n-pentacosane in a proportion ranging from 25 to 30% in weight; and
- n-hexacosane in a proportion ranging from 3 to 7% in weight.

Another preferred hydrocarbon mixture according to the present invention comprises 11-methyltetracosane, 5-methylpentacosane, 11-methylpentacosane, (Z)-9-pentacosene, n-pentacosane, n-hexacosane, 5,17-dimethylpentacosane, and 5-methyltetracosane (mixture C). More preferably, the following mixture is used (mixture C-1):
- 11-methyltetracosane in a proportion ranging from 0.1 to 10% in weight;
- 5-methylpentacosane in a proportion ranging from 3 to 18% in weight;
- 11-methylpentacosane in a proportion ranging from 27 to 41 % in weight;
- (Z)-9-pentacosene in a proportion ranging from 11 to 26% in weight;
- n-pentacosane in a proportion ranging from 19 to 33% in weight;
- n-hexacosane in a proportion ranging from 1 to 10% in weight.
- 5,17-dimethylpentacosane in a proportion ranging from 0.1 to 5% in weight; and
- 5-methyltetracosane in a proportion ranging from 0.1 to 5% in weight.

Even more preferably, the following mixture is used (mixture C-2) :
- 11-methyltetracosane in a proportion ranging from 1 to 5% in weight;
- 5-methylpentacosane in a proportion ranging from 8 to 13% in weight;
- 11-methylpentacosane in a proportion ranging from 32 to 36% in weight;
- (Z)-9-pentacosene in a proportion ranging from 16 to 21% in weight;
- n-pentacosane in a proportion ranging from 24 to 28% in weight;
- n-hexacosane in a proportion ranging from 2 to 7% in weight.
- 5,17-dimethylpentacosane in a proportion ranging from 0.5 to 3% in weight; and
- 5-methyltetracosane in a proportion ranging from 0.5 to 3% in weight.

In order for the effects of hydrocarbon compound mixtures according to the present invention to be significant, the mixture quantity to be used may vary according to the insect species targeted and the intensity of the effect sought. Preferably, 0.000001 to 1 g/m² of hydrocarbon compound mixture according to the present invention will be used. More preferably, 0.00001 to 0.5 g/m² of hydrocarbon compound mixture according to the present invention will be used. Even more preferably0.0001 to 02 g/m² of hydrocarbon compound mixture according to the present invention will be used. These quantities are equivalent, from a practical point of view, to a quantity of hydrocarbon compound mixture according to the present invention used ranging from 0.0001 to 100 µg/cm², preferably from 0.001 to 50 µg/cm², even more preferably from 0.01 to 20 µg/cm².

The object of the present invention is therefore a method of fighting against termites, comprising comprising the use of a hydrocarbon compound mixture as defined above.

Certain hydrocarbon compounds mixtures according to the present invention are novel. Preferably, the present invention relates to the following mixture (mixture A-1):
- 11-methylpentacosane in a proportion ranging from 36 to 51% in weight;
- (Z)-9-pentacosene in a proportion ranging from 16 to 31 % in weight; and
- n-pentacosane in a proportion ranging from 26 to 41 % in weight.

Even more preferably, the present invention relates to the following mixture (mixture (A-2) :
- 11-methylpentacosane in a proportion ranging from 41 to 46% in weight;
- (Z)-9-pentacosene in a proportion ranging from 21 to 26% in weight; and
- n-pentacosane in a proportion ranging from 31 to 35% in weight.

Another mixture which is the object of the present invention is a hydrocarbon compounds mixture comprising the following mixture (mixture B-1) :
- 5-methylpentacosane in a proportion ranging from 4 to 19% in weight;
- 11-methylpentacosane in a proportion ranging from 29 to 43% in weight;
- (Z)-9-pentacosene in a proportion ranging from 12 to 27% in weight;
- n-pentacosane in a proportion ranging from 30 to 35% in weight; and
- n-hexacosane in a proportion ranging from 1 to 10% in weight.

Even more preferably, the present invention relates to the following mixture (mixture (B-2) :
- 5-methylpentacosane in a proportion ranging from 9 to 14% in weight;
- 11-methylpentacosane in a proportion ranging from 34 to 38% in weight;
- (Z)-9-pentacosene in a proportion ranging from 17 to 22% in weight;
- n-pentacosane in a proportion ranging from 25 to 30% in weight; and
- n-hexacosane in a proportion ranging from 3 to 7% in weight.

Another mixture which is the object of the present invention is a hydrocarbon compounds mixture comprising 11-methyltetracosane, 5-methylpentacosane, 11-methylpentacosane, (Z)-9-pentacosene, n-pentacosane, n-hexacosane, 5,17-dimethylpentacosane, and 5-methyltetracosane (mixture C). Preferably, the present invention relates to the following mixture (mixture C-1) :
- 11-methyltetracosane in a proportion ranging from 0.1 to 10% in weight;
- 5-methylpentacosane in a proportion ranging from 3 to 8% in weight;
- 11-methylpentacosane in a proportion ranging from 27 to 31% in weight;
- (Z)-9-pentacosene in a proportion ranging from 11 to 26% in weight;
- n-pentacosane in a proportion ranging from 19 to 23% in weight;
- n-hexacosane in a proportion ranging from 1 to 10% in weight;
- 5,17-dimethylpentacosane in a proportion ranging from 0.1 to 5% in weight; and
- 5-methyltetracosane in a proportion ranging from 0.1 to 5%.

Even more preferably, the present invention relates to the following mixture (mixture (C-2) :
- 11-methyltetxacosane in a proportion ranging from 1 to 5% in weight;
- 5-methylpentacosane in a proportion ranging from 8 to 13% in weight;
- 11-methylpentacosane in a proportion ranging from 32 to 36% in weight;
- (Z)-9-pentacosene in a proportion ranging from 16 to 21 % in weight;
- n-pentacosane in a proportion ranging from 24 to 28% in weight;
- n-hexacosane in a proportion ranging from 2 to 7% in weight;
- 5,17-dimethylpentacosane in a proportion ranging from 0.5 to 3% in weight; and
- 5-methyltetracosane in a proportion ranging from 0.5 to 3%.

Another object of the present invention is an insecticide composition including a hydrocarbon compound mixture as defined above and one or several insecticide compounds.

Among the insecticide compounds which may be used in the context of the present invention, for the followings may be cited as examples : abamectin, acephate, acetamiprid, acrinathrin, alanycrb, aldicarb, allethrin, alpha-cypermethrin, aluminium phosphide, amitraz, azadirachtin, azamethiphos, azinphos-ethyl, azinphos-methyl, bendiocarb, benfuracarb, bensultap, beta-cyfluthrin, beta-cypermethrin, bifenthrin, bioallethrin, bioallethrin S-cyclopentenyl isomer, bioresmethrin, bistrifluron, borax, buprofezin, butocarboxim, butoxycarboxim, cadusafos, calcium cyanide, calcium polysulfide, carbaryl, carbofuran, carbosulfan, cartap, chlordane, chlorethoxyfos, chlorfenapyr, chlorfenvinphos, chlorfluazuron, chlormephos, chloropicrin, chlorpyrifos, chlorpyrifos-methyl, chromafenozide, clothianidin, coumaphos, cryolite, cyanophos, cycloprothrin, cyfluthrin, cyhalothrin, cypermethrin, cyphenothrin, cyromazine, dazomet, deltamethrin, demeton-S-methyl, diafenthiuron, diazinon, dichlorvos, dicrotophos, dicyclanil, diflubenzuron, dimethoate, dimethylvinphos, dinotefuran, disulfoton, emamectin, emamectin benzoate, empenthrin, endosulfan, esfenvalerate, ethiofencarb, ethion, ethiprole, ethoprophos, ethylene dibromide, etofenprox, etoxazole, famphur, fenitrothion, fenobucarb, fenoxycarb, fenpropathrin, fenthion, fenvalerate, fipronil, flonicamid, flucycloxuron, flucythrinate, flufenoxuron, flumethrin, formetanate, formetanate hydrochloride, fosthiazate, furathiocarb, halofenozide, heptachlor, heptenophos, hexaflumuron, hydramethylnon, hydroprene, imidacloprid, imiprothrin, indoxacarb, isofenphos, isoprocarb, isopropyl O-(methoxyaminothiophosphoryl) salicylate, isoxathion, lambda-cyhalothrin, lithium perfluorooctane sulfonate, lufenuron, magnesium phosphide, malathion, mecarbam, mercurous chloride, metam, metam-sodium, methamidophos, methidathion, methiocarb, methomyl, methoprene, methothrin, methoxychlor, methoxyfenozide, methyl isothiocyanate, metolcarb, mevinphos, milbemectin, monocrotophos, naled, naphthalenic compounds, nicotine, nitenpyram, nithiazine, novaluron, noviflumuron, omethoate, oxamyl, oxydemeton-methyl, parathion, parathion-methyl, pentachlorophenol, pentachlorophenyl laurate, permethrin, petroleum oils, phenothrin, phenthoate, phorate, phosalone, phosmet, phosphamidon, phosphine, phoxim, pirimicarb, pirimiphos-methyl, prallethrin, profenofos, propaphos, propetamphos, propoxur, prothiofos, pymetrozine, pyraclofos, pyrethrins, pyrethrins, pyrethrins, pyridaben, pyridaphenthion, pyrimidifen, pyriproxyfen, quinalphos, resmethrin, rotenone, sabadilla, silafluofen, sodium cyanide, sodium pentachloro-phenoxide, spinosad, sulcofuron, sulcofuron-sodium, sulfluramid, sulfotep, sulfuryl fluoride, sulprofos, tau-fluvalinate, tebufenozide, tebupirimfos, teblubenzuron, tefluthrin, temephos, terbufos, tetrachlorvinphos, tetramethrin, tetramethrin, theta-cypermethrin, thiacloprid, thiamethoxam, thiodicarb, thiofanox, thiometon, thiosultap-sodium, tolfenpyrad, tralomethrin, transfluthrin, triazamate, triazophos, trichlorfon, triblumuron, trimethacarb, vamidothion, xylylcarb, zeta-cypermethrin, and zinc phosphide.

Among these compounds fipronil, chlorfenapyr, spinosad, thiamethoxam, imidacloprid, indoxacarb, clothianidin, acetamiprid, dinotefuran, flonicamid, nitenpyram, nithiazine, hexaflumuron, lufenuron, noviflumuron, triflumuron, or ethiprole are preferably used. More preferably, fipronil, chlorfenapyr, spinosad, thiamethoxam, imidacloprid, or ethiprole are used. Even more preferably, imidacloprid or fipronil are used.

Among the insecticide compositions preferred to be used in the method according to the invention the following compositions can be cited as examples but without limitation thereto :

| **Insecticide composition according to invention** | **Hydrocarbon compound mixture** | **Insecticide compound** |
|---|---|---|
| 1 | Mixture A | Imidacloprid |
| 2 | Mixture A-1 . | Imidacloprid |
| 3 | Mixture A-2 | Imidacloprid |
| 4 | Mixture B | Imidacloprid |
| 5 | Mixture B-1 | Imidacloprid |
| 6 | Mixture B-2 | Imidacloprid |
| 7 | Mixture C | Imidacloprid |
| 8 | Mixture C-1 | Imidacloprid |
| 9 | Mixture C-2 | Imidacloprid |
| 10 | Mixture A | Fipronil |
| 11 | Mixture A-1 | Fipronil |
| 12 | Mixture A-2 | Fipronil |
| 13 | Mixture B | Fipronil |
| 14 | Mixture B-1 | Fipronil |
| 15 | Mixture B-2 | Fipronil |
| 16 | Mixture C | Fipronil |
| 17 | Mixture C-1 | Fipronil |
| 18 | Mixture C-2 | Fipronil |
| 19 | Mixture A | Chlorfenapyr |
| 20 | Mixture A-1 | Chlorfenapyr |
| 21 | Mixture A-2 | Chlorfenapyr |
| 22 | Mixture B | Chlorfenapyr |
| 23 | Mixture B-1 | Chlorfenapyr |
| 24 | Mixture B-2 | Chlorfenapyr |
| 25 | Mixture C | Chlorfenapyr |
| 26 | Mixture C-1 | Chlorfenapyr |
| 27 | Mixture C-2 | Chlorfenapyr |
| 28 | Mixture A | Spinosad |
| 29 | Mixture A-1 | Spinosad |
| 30 | Mixture A-2 | Spinosad |
| 31 | Mixture B | Spinosad |
| 32 | Mixture B-1 | Spinosad |
| 33 | Mixture B-2 | Spinosad |
| 34 | Mixture C | Spinosad |
| 35 | Mixture C-1 | Spinosad |
| 36 | Mixture C-2 | Spinosad |
| 37 | Mixture A | Thiamethoxam |
| 38 | Mixture A-1 | Thiamethoxam |
| 39 | Mixture A-2 | Thiamethoxam |
| 40 | Mixture B | Thiamethoxam |
| 41 | Mixture B-1 | Thiamethoxam |
| 42 | Mixture B-2 | Thiamethoxam |
| 43 | Mixture C | Thiamethoxam |
| 44 | Mixture C-1 | Thiamethoxam |
| 45 | Mixture C-2 | Thiamethoxam |
| 46 | Mixture A | Ethiprole |
| 47 | Mixture A-1 | Ethiprole |
| 48 | Mixture A-2 | Ethiprole |
| 49 | Mixture B | Ethiprole |
| 50 | Mixture B-1 | Ethiprole |
| 51 | Mixture B-2 | Ethiprole |
| 52 | Mixture C | Ethiprole |
| 53 | Mixture C-1 | Ethiprole |
| 54 | Mixture C-2 | Ethiprole |
| 55 | Mixture A | Indoxacarb |
| 56 | Mixture A-1 | Indoxacarb |
| 57 | Mixture A-2 | Indoxacarb |
| 58 | Mixture B | Indoxacarb |
| 59 | Mixture B-1 | Indoxacarb |
| 60 | Mixture B-2 | Indoxacarb |
| 61 | Mixture C | Indoxacarb |
| 62 | Mixture | C-1 Indoxacarb |
| 63 | Mixture C-2 | Indoxacarb |
| 64 | Mixture A | Chlothianidin |
| 65 | Mixture A-1 | Chlothianidin |
| 66 | Mixture A-2 | Chlothianidin |
| 67 | Mixture B | Chlothianidin |
| 68 | Mixture B-1 | Chlothianidin |
| 69 | Mixture B-2 | Chlothianidin |
| 70 | Mixture C | Chlothianidin |
| 71 | Mixture C-1 | Chlothianidin |
| 72 | Mixture C-2 | Chlothianidin |
| 73 | Mixture A | Hexaflumuron |
| 74 | Mixture A-1 | Hexaflumuron |
| 75 | Mixture A-2 | Hexaflumuron |
| 76 | Mixture B | Hexaflumuron |
| 77 | Mixture B-1 | Hexaflumuron |
| 78 | Mixture B-2 | Hexaflumuron |
| 79 | Mixture C | Hexaflumuron |
| 80 | Mixture C-1 | Hexaflumuron |
| 81 | Mixture C-2 | Hexaflumuron |
| 82 | Mixture A | Lufenuron |
| 83 | Mixture A-1 | Lufenuron |
| 84 | Mixture A-2 | Lufenuron |
| 85 | Mixture B | Lufenuron |
| 86 | Mixture B-1 | Lufenuron |
| 87 | Mixture B-2 | Lufenuron |
| 88 | Mixture C | Lufenuron |
| 89 | Mixture C-1 | Lufenuron |
| 90 | Mixture C-2 | Lufenuron |
| 91 | Mixture A | Noviflumuron |
| 92 | Mixture A-1 | Noviflumuron |
| 93 | Mixture A-2 | Noviflumuron |
| 94 | Mixture B | Noviflumuron |
| 95 | Mixture B-1 | Noviflumuron |
| 96 | Mixture B-2 | Noviflumuron |
| 97 | Mixture C | Noviflumuron |
| 98 | Mixture C-1 | Noviflumuron |
| 99 | Mixture C-2 | Noviflumuron |
| 100 | Mixture A | Triflumuron |
| 101 | Mixture A-1 | Triflumuron |
| 102 | Mixture A-2 | Triflumuron |
| 103 | Mixture B | Triflumuron |
| 104 | Mixture B-1 | Triflumuron |
| 105 | Mixture B-2 | Triflumuron |
| 106 | Mixture C | Triflumuron |
| 107 | Mixture C-1 | Triflumuron |
| 108 | Mixture C-2 | Triflumuron |

The insecticide composition according to the present invention may optionally contain one or several tensioactive agents as well as one or several supports.

According to the present invention, tensioactive agent means any ionic or non-ionic emulsifying, dispersing, or wetting agent or a mixture of such tensioactive agents. We can cite, for example, polyacrylic acid salts, lignosulfonic acid salts, phenolsulfonic or naphthalenesulfonic acid salts, ethylene oxide polycondensates on fatty alcohols or on fatty acids or on fatty amines, substituted phenols (especially alkylphenols or arylphenols), sulfosuccinic acid ester salts, taurine derivatives (especially alkyltaurates), phosphoric esters of alcohols or of polyoxyethylated phenols, fatty acid and polyol esters, sulfate function derivatives, sulfonates and phosphates of the above compounds. The presence of at least one tensioactive agent is generally indispensable when the active matter and/or the inert support are not soluble in water and the application vector agent is water.

The insecticide composition according to the present invention may contain the hydrocarbon compound mixture in very varied proportions depending on the efficacy sought and the termites targeted. Preferably, the composition according to this invention may contain from 0.000001% to 99.99% in weight of the hydrocarbon compound mixture according to the present invention, preferably from 0.0001% to 99.99% in weight, more preferably from 0.01 to 99.99% in weight of the hydrocarbon compound mixture according to the present invention.

The insecticide composition according to the present invention may be used in various forms among which can be cited oily solutions, emulsifiable concentrates, wettable powders, fluid formulations, and specifically aqueous suspensions or aqueous emulsions, granules, powders, pastes, emulsions, concentrated suspensions, as well as possible mixtures, associations, or combinations of these various forms.

The insecticide composition according to the present invention may take the form of numerous formulation types. Therefore, these compositions can be used in the form of water soluble package; in the form of bait such as ready-to-use bait, concentrate for bait preparation, baits in stock, baits on grain, granulated bait, bait in plates, or bait on chips; in the form of fumigant, such as smoke candle, smoke cartridge, smoke granules, smoke stick, smoke tablet, or smoke box; in the form of granules such as encapsulated granules, fine granules, macrogranules, microgranules, granules or tables dispersible in water, or granules or tablets soluble in water; in the form of powder such as soluble powder, track powder, wettable powder, powder for powdering, wettable powder for moist treatment, soluble powder for seed treatment or powder to be dispersed in oil; in the form of concentrated suspension also called liquefiable concentrate; in the form of concentrated suspension dilutable in oil; in the form of suspension for very low volume application; in the form of emulsion such as an aqueous emulsion or an oily/inverse emulsion; in the form of gel; in the form of compressed gas; in the form of gas generating product; in the form of liquid miscible in oil; in the form of paste; in the form of soluble concentrate; in the form of liquid for seed treatment; in the form of capsule suspension; in the form of emulsifiable concentrate; in the form of liquid for very low volume application; in the form of steam spreading product; in the form of aerosol generator; in the form of product for cold nebulization; or in the form of product for hot nebulization.

Preferably, the insecticides according to the invention may take the form of water soluble package, concentrated suspension, granules, bait, or fumigant.

The use of a hydrocarbon compound mixture according to the present invention in mixture with one or several of the aforementioned insecticide compounds considerably increases the efficacy of the toxins on the members of the colony that are in contact with the composition and/or consume it, since, due to the arresting effect of the hydrocarbon compound mixture, they remain in contact with the insecticide composition for a longer time and/or consume more of it. In addition, the use of a hydrocarbon compound mixture according to this invention in mixture with one or several of the insecticide compounds mentioned above also considerably increases the efficacy of the toxins on the other members of the colony, including the members in the nest, since, always due to the arresting effect of the hydrocarbon compound mixture, the termites that have consumed the insecticide composition according to this invention will transmit a much larger quantity to the other members of the colony.

The compositions according to the present invention may be used in the fight against termites. Thus, the object of this invention is also a method of treatment against termites using an efficacious quantity of an insecticide composition described above.

In the context of the present invention, "efficacious quantity" means a quantity of composition according to the invention sufficient to reduce the number of termites or termites or eliminate them. Advantageously, such a quantity will completely destroy the colony.

The following examples are mentioned in order to illustrate in a non-limiting manner the invention.

### Example 1 : Demonstration of the "arresting" effect on a population of termites from a mixture according to the invention including 5-methylpentacosane, 11-methylpentacosane, (Z)-9-pentacosene, n-pentacosane, and n-hexacosane (mixture B)

20 termite workers of type *Reticulitermes santonensis- flavipes* are placed in a 5-cm Petri dish containing :
- 2 mm Fontainebleau wet sand on the bottom;
- a 1 cm² square of filter paper treated with 50 µl of a hydrocarbon compound mixture containing 11.4% in weight of 5-methylpentacosane; 36.3% in weight of 11-methylpentacosane; 19.6% in weight of (Z)-9-pentacosene; 27.7% in weight of n-pentacosane, and 5% in weight of n-hexacosane. This hydrocarbon compound mixture is dissolved in pentane and deposited on filter paper. The termites are placed in contact with the treated paper after complete evaporation of the pentane;
- a 1 cm² square of filter paper, untreated.

The termites found under each of the two sheets of filter paper are then counted after 1 hour, 2 hours, and 4 hours.

This test is repeated identically 5 times.

A control test conducted under the same condition with non-treated filter paper and filter paper treated with pentane used to dissolve the hydrocarbon compound mixture tested, with the termites coming in contact with the treated paper only after the complete evaporation of pentane, is also done 5 times.

The results obtained are then analyzed statistically according to the X² (Chi-square) method : the observed distribution is compared to the theoretical distribution (10 termites under each filter paper). For a significance threshold α equal to 5%, the values obtained are significantly different from reference values, thus proving the arresting effect of the mixture tested, for a X² > 9.48.

The mixture was tested with various concentrations (10⁻¹ g/ml, 10⁻² g/ml, 10⁻³ g/ml, and 10⁻⁴ g/ml) and the results obtained are summarised in the table below:
Survey done at t + 1 hour

| **Samples** | **Trial number** | **Number of termites under untreated filter paper (N⁻)** | **Number of termites under treated (with pentane evaporated or the mixture to be tested) filter paper (N⁺)** | **Δ (= N⁺ - N⁻)** | **X²** |
|---|---|---|---|---|---|
| Test | Trial 1 | 16 | 4 | -12 | - |
| | Trial 2 | 0 | 20 | 20 | - |
| | Trial 3 | 10 | 10 | 0 | - |
| | Trial 4 | 2 | 18 | 16 | - |
| | Trial 5 | 20 | 0 | 20 | - |
| | **Average** | **9.6** | **10.4** | **0.8** | **2** |
| Mixture with 10⁻¹ g/ml | Trial 1 | 5 | 15 | 10 | - |
| | Trial 2 | 10 | 10 | 0 | - |
| | Trial 3 | 8 | 12 | 4 | - |
| | Trial 4 | 6 | 14 | 8 | - |
| | Trial 5 | 9 | 11 | 2 | - |
| | **Average** | **7.6** | **12.4** | **4.8** | **4.6** |
| Mixture with 10⁻² g/ml | Trial 1 | 6 | 14 | 8 | - |
| | Trial 2 | 8 | 12 | 4 | - |
| | Trial 3 | 11 | 9 | -2 | - |
| | Trial 4 | 5 | 15 | 10 | - |
| | Trial 5 | 7 | 13 | 6 | - |
| | **Average** | **7.4** | **12.6** | **5.2** | **6.5** |
| Mixture with 10⁻³ g/ml | Trial 1 | 17 | 3 | -14 | |
| | Trial 2 | 8 | 12 | 4 | |
| | Trial 3 | 10 | 10 | 0 | |
| | Trial 4 | 7 | 13 | 6 | |
| | Trial 5 | 4 | 16 | 12 | |
| | **Average** | **9.2** | **10.8** | **1.6** | **9.8** |
| Mixture with 10⁻⁴ g/ml | Trial 1 | 8 | 12 | 4 | |
| | Trial 2 | 12 | 8 | -4 | |
| | Trial 3 | 5 | 15 | 10 | |
| | Trial 4 | 6 | 14 | 8 | |
| | Trial 5 | 11 | 9 | -2 | |
| | **Average** | **8.4** | **11.6** | **3.2** | **5** |

Survey done at t + 2 hours

| **Samples** | **Trial number** | **Number of termites under untreated filter paper (N⁻)** | **Number of termites under treated (with pentane evaporated or the mixture to be tested) filter paper (N⁺)** | **Δ (= N⁺ - N⁻)** | **X²** |
|---|---|---|---|---|---|
| Test | Trial 1 | 7 | 13 | 6 | - |
| | Trial 2 | 8 | 12 | 4 | - |
| | Trial 3 | 6 | 14 | 14 | - |
| | Trial 4 | 7 | 13 | 6 | - |
| | Trial 5 | 16 | 4 | -12 | - |
| | **Average** | **8.8** | **11.2** | **3.6** | **5.4** |
| Mixture with 10⁻¹ g/ml | Trial 1 | 10 | 10 | 0 | - |
| | Trial 2 | 3 | 17 | 14 | - |
| | Trial 3 | 5 | 15 | 10 | - |
| | Trial 4 | 4 | 16 | 12 | - |
| | Trial 5 | 6 | 14 | 8 | - |
| | **Average** | **5.6** | **14.4** | **8.8** | **12.6** |
| Mixture with 10⁻² g/ml | Trial 1 | 3 | 17 | 14 | - |
| | Trial 2 | 12 | 8 | -4 | - |
| | Trial 3 | 11 | 9 | -2 | - |
| | Trial 4 | 10 | 10 | 0 | - |
| | Trial 5 | 8 | 12 | 4 | - |
| | **Average** | **8.8** | **11.2** | **2.4** | **5.8** |
| Mixture with 10⁻³ g/ml | Trial 1 | 0 | 20 | 20 | - |
| | Trial 2 | 3 | 17 | 14 | - |
| | Trial 3 | 11 | 9 | -2 | - |
| | Trial 4 | 14 | 6 | -8 | - |
| | Trial 5 | 10 | 10 | 0 | - |
| | **Average** | **7.6** | **12.4** | **4.8** | **16.6** |
| Mixture with 10⁻⁴ g/ml | Trial 1 | 10 | 10 | 0 | - |
| | Trial 2 | 7 | 13 | 6 | - |
| | Trial 3 | 0 | 20 | 20 | - |
| | Trial 4 | 14 | 6 | -8 | - |
| | Trial 5 | 10 | 10 | 0 | - |
| | **Average** | **8.2** | **11.8** | **3.6** | **12.5** |

Survey done at t + 4 hours

| **Samples** | **Trial number** | **Number of termites under untreated filter paper (N⁻)** | **Number of termites under treated (with pentane evaporated or the mixture to be tested) filter paper (N⁺)** | **Δ (=N⁺-N⁻)** | **X²** |
|---|---|---|---|---|---|
| Test | Trial 1 | 12 | 8 | -4 | - |
| | Trial 2 | 8 | 12 | 4 | - |
| | Trial 3 | 16 | 4 | -12 | - |
| | Trial 4 | 8 | 12 | 4 | - |
| | Trial 5 | 8 | 12 | 4 | - |
| | **Average** | **10.4** | **9.6** | **-0.8** | **0.6** |
| Mixture with 10⁻¹ g/ml | Trial 1 | 7 | 13 | 6 | - |
| | Trial 2 | 10 | 10 | 0 | - |
| | Trial 3 | 3 | 17 | 14 | - |
| | Trial 4 | 2 | 18 | 16 | - |
| | Trial 5 | 10 | 10 | 0 | - |
| | **Average** | **6.4** | **13.6** | **7.2** | **12.2** |
| Mixture with 10⁻² g/ml | Trial 1 | 10 | 10 | 0 | - |
| | Trial 2 | 13 | 7 | -6 | - |
| | Trial 3 | 10 | 10 | 0 | - |
| | Trial 4 | 9 | 11 | 2 | - |
| | Trial 5 | 4 | 16 | 12 | - |
| | **Average** | **9.2** | **10.8** | **1.6** | **4.6** |
| Mixture with 10⁻³ g/ml | Trial 1 | 15 | 5 | -10 | - |
| | Trial 2 | 10 | 10 | 0 | - |
| | Trial 3 | 8 | 12 | 4 | - |
| | Trial 4 | 7 | 13 | 6 | - |
| | Trial 5 | 5 | 15 | 10 | - |
| | **Average** | **9** | **11** | **2** | **6.3** |
| Mixture with 10⁻⁴ g/ml | Trial 1 | 8 | 12 | 4 | - |
| | Trial 2 | 15 | 5 | -10 | - |
| | Trial 3 | 2 | 18 | 16 | - |
| | Trial 4 | 3 | 17 | 14 | - |
| | Trial 5 | 10 | 10 | 0 | - |
| | **Average** | **7.6** | **12.4** | **4.8** | **14.2** |

As shown by these results, a significant arresting effect (confirmed by X² test) is observed for the hydrocarbon compound mixture tested, at all concentrations tested. The higher the concentrations of the hydrocarbon mixtures, the more quickly the arresting effect of these mixtures is noticed.

### Example 2 : Demonstration of the "arresting" effect on a termite population according to the invention including 11-methyltetracosane, 5-methylpentacosane, 11-methylpentacosane, (Z)-9-pentacosene, n-pentacosane, n-hexacosane, 5,17-dimethylpentacosane, and 5-methyltetracosane (mixture C)

20 worker termites of *Reticulitermes santonensis* type are placed in a Petri dish with a diameter of 5 cm containing :
- 2 mm wet Fontainebleau sand on the bottom;
- a 1 cm² square of filter paper treated with 50 µl of a hydrocarbon compound mixture including 3.3% 11-methyltetracosane, 10.7% in weight of 5-methylpentacosane; 34.2% in weight of 11-methyltetracosane; 18.5% in weight of (Z)-9-pentacosene; 26.1% in weight of n-pentacosane, 4.7% in weight of n-hexacosane, 1.1% of 5,17-dimethylpentacosane, and 1.4% of 5-methyltetracosane. This hydrocarbon compound mixture is dissolved in pentane and deposited on the filter paper. The termites are placed in contact with the treated paper after complete evaporation of the pentane;
- a 1 cm² square of filter paper, untreated.

The termites found under each of the two sheets of filter paper are then counted after 1 hour, 2 hours, and 4 hours.

This test is repeated identically 5 times.

A control test conducted under the same condition with untreated filter paper and filter paper treated with pentane used to dissolve the hydrocarbon compound mixture tested, the termites being in contact with the treated paper only after the complete evaporation of pentane, is also done 5 time.

The results obtained are then analyzed statistically by the X² (Chi-square) method : the distribution observed is compared to the theoretical distribution (10 termites under each filter paper). For a significance threshold α equal to 5%, the values obtained are significantly different from reference values, thus proving the arresting effect of the mixture tested, for a X² > 9.48.

The mixture was tested with various concentrations (10⁻¹ g/ml, 10⁻² g/ml, 10⁻³ g/ml, and 10⁻⁴ g/ml) and the results obtained are summarised in the table below:
Survey done at t + 1 hours

| **Samples** | **Trial number** | **Number of termites under untreated filter paper (N⁻)** | **Number of termites under treated (with pentane evaporated or the mixture to be tested) filter paper (N⁺)** | **Δ (=N⁺- N⁻)** | **X²** |
|---|---|---|---|---|---|
| Test | Trial 1 | 10 | 10 | 0 | - |
| | Trial 2 | 6 | 14 | 8 | - |
| | Trial 3 | 16 | 4 | -12 | - |
| | Trial 4 | 13 | 7 | -6 | - |
| | Trial 5 | 8 | 12 | 4 | - |
| | **Average** | **10.6** | **9.4** | **-1.2** | **6.5** |
| Mixture with 10⁻¹ g/ml | Trial 1 | 3 | 17 | 14 | - |
| | Trial 2 | 0 | 20 | 20 | - |
| | Trial 3 | 3 | 17 | 14 | - |
| | Trial 4 | 4 | 16 | 12 | - |
| | Trial 5 | 1 | 19 | 18 | - |
| | **Average** | **2.2** | **17.8** | **15.6** | **31.5** |
| Mixture with 10⁻² g/ml | Trial 1 | 13 | 7 | -6 | - |
| | Trial 2 | 4 | 16 | 12 | - |
| | Trial 3 | 6 | 14 | 8 | - |
| | Trial 4 | 2 | 18 | 16 | - |
| | Trial 5 | 0 | 20 | 20 | - |
| | **Average** | **5** | **15** | **10** | **22.5** |
| Mixture with 10⁻³ g/ml | Trial 1 | 18 | 2 | -16 | - |
| | Trial 2 | 15 | 5 | -10 | - |
| | Trial 3 | 1 | 19 | 18 | - |
| | Trial 4 | 16 | 4 | -12 | - |
| | Trial 5 | 12 | 8 | -4 | - |
| | **Average** | **12.4** | **7.6** | **-4.8** | - |
| Mixture with 10⁻⁴ g/ml | Trial 1 | 18 | 2 | -16 | - |
| | Trial 2 | 10 | 10 | 0 | - |
| | Trial 3 | 18 | 2 | -16 | - |
| | Trial 4 | 10 | 10 | 0 | - |
| | Trial 5 | 12 | 8 | -4 | - |
| | **Average** | **13.6** | **6.4** | **-7.2** | - |
| Mixture with 10⁻⁵ g/ml | Trial 1 | 18 | 2 | -16 | - |
| | Trial 2 | 10 | 10 | 0 | - |
| | Trial 3 | 10 | 10 | 0 | - |
| | Trial 4 | 4 | 16 | 12 | - |
| | Trial 5 | 15 | 5 | -10 | - |
| | **Average** | **11.4** | **8.6** | **-2.8** | - |

Survey done at t + 2 hours

| **Samples** | **Trial number** | **Number of termites under untreated filter paper (N⁻)** | **Number of termites under the treated (with pentane evaporated or the mixture** to **be tested) filter paper (N⁺)** | **Δ (= N⁺ - N⁻)** | **X²** |
|---|---|---|---|---|---|
| Test | Trial 1 | 10 | 10 | 0 | - |
| | Trial 2 | 13 | 7 | -6 | - |
| | Trial 3 | 16 | 4 | -12 | - |
| | Trial 4 | 5 | 15 | 10 | - |
| | Trial 5 | 10 | 10 | 0 | - |
| | **Average** | **10.8** | **9.2** | **-1.6** | **7** |
| Mixture with 10⁻¹ g/ml | Trial 1 | 10 | 10 | 0 | - |
| | Trial 2 | 2 | 18 | 16 | - |
| | Trial 3 | 2 | 18 | 16 | - |
| | Trial 4 | 11 | 9 | -2 | - |
| | Trial 5 | 4 | 16 . | 12 | - |
| | **Average** | **5.8** | **14.2** | **8.4** | **16.5** |
| Mixture with 10⁻² g/ml | Trial 1 | 10 | 10 | 0 | - |
| | Trial 2 | 0 | 20 | 20 | - |
| | Trial 3 | 1 | 19 | 18 | - |
| | Trial 4 | 7 | 13 | 6 | - |
| | Trial 5 | 1 | 19 | 18 | - |
| | **Average** | **3.8** | **16.2** | **12.4** | **27.1** |
| Mixture with 10⁻¹ g/ml | Trial 1 | 10 | 10 | 0 | - |
| | Trial 2 | 16 | 4 | -10 | - |
| | Trial 3 | 6 | 14 | 8 | - |
| | Trial 4 | 12 | 8 | -4 | - |
| | Trial 5 | 6 | 14 | 8 | - |
| | **Average** | **10** | **10** | **0** | **7.2** |
| Mixture with 10⁻⁴ g/ml | Trial 1 | 1 | 19 | 18 | - |
| | Trial 2 | 6 | 14 | 8 | - |
| | Trial 3 | 16 | 4 | -12 | - |
| | Trial 4 | 10 | 10 | 0 | - |
| | Trial 5 | 12 | 8 | -4 | - |
| | **Average** | **9** | **11** | **2** | **13.7** |
| Mixture with 10⁻⁵ g/ml | Trial 1 | 2 | 18 | 16 | - |
| | Trial 2 | 8 | 12 | 4 | - |
| | Trial 3 | 10 | 10 | 0 | - |
| | Trial 4 | 4 | 16 | 12 | - |
| | Trial 5 | 10 | 10 | 0 | - |
| | **Average** | **6.8** | **13.2** | **6.4** | **10.4** |

Survey done at t + 4 hours

| **Samples** | **Trial number** | **Number of termites under untreated filter paper (N⁻)** | **Number of termites under the treated (with pentane evaporated or the mixture to be tested) filter paper (N⁺)** | **Δ (= N⁺ - N⁻)** | **X²** |
|---|---|---|---|---|---|
| Test | Trial 1 | 10 | 10 | 0 | - |
| | Trial 2 | 15 | 5 | -10 | - |
| | Trial 3 | 16 | 4 | -12 | - |
| | Trial 4 | 2 | 18 | 16 | - |
| | Trial 5 | 10 | 10 | 0 | - |
| | **Average** | **10.6** | **9.4** | **-1.2** | **12.5** |
| Mixture with 10⁻¹ g/ml | Trial 1 | 8 | 12 | 4 | - |
| | Trial 2 | 12 | 8 | -4 | - |
| | Trial 3 | 2 | 18 | 16 | - |
| | Trial 4 | 6 | 14 | 8 | - |
| | Trial 5 | 1 | 19 | 18 | - |
| | **Average** | **5.8** | **14.2** | **8.4** | **16.9** |
| Mixture with 10⁻² g/ml | Trial 1 | 10 | 10 | 0 | - |
| | Trial 2 | 0 | 20 | 20 | - |
| | Trial 3 | 2 | 18 | 16 | - |
| | Trial 4 | 6 | 14 | 8 | - |
| | Trial 5 | 2 | 18 | 16 | - |
| | **Average** | **4** | **16** | **12** | **24.4** |
| Mixture with 10⁻³ g/ml | Trial 1 | 10 | 10 | 0 | - |
| | Trial 2 | 12 | 8 | -4 | - |
| | Trial 3 | 6 | 14 | 8 | - |
| | Trial 4 | 12 | 8 | -4 | - |
| | Trial 5 | 2 | 18 | 16 | - |
| | **Average** | **8.4** | **11.6** | **3.2** | **8.8** |
| Mixture with 10⁻⁴ g/ml | Trial 1 | 16 | 4 | -12 | - |
| | Trial 2 | 5 | 15 | 10 | - |
| | Trial 3 | 3 | 17 | 14 | - |
| | Trial 4 | 3 | 17 | 14 | - |
| | Trial 5 | 4 | 16 | 12 | - |
| | **Average** | **6.2** | **13.8** | **7.6** | **19.5** |
| Mixture with 10⁻¹ g/ml | Trial 1 | 1 | 19 | 18 | - |
| | Trial 2 | 2 | 18 | 16 | - |
| | Trial 3 | 10 | 10 | 0 | - |
| | Trial 4 | 7 | 13 | 6 | - |
| | Trial 5 | 15 | 5 | -10 | - |
| | **Average** | **7** | **13** | **6** | **17.9** |

As shown by these results, a significant "arresting" effect (confirmed by X² test) is observed for the hydrocarbon compound mixture tested. The higher the concentrations of the hydrocarbon mixtures, the more quickly the arresting effect of these mixtures is noticed.

### Example 3 : Demonstration of the improvement in the transmission of a biocide between the various members of a termite population thanks to addition of a mixture including 5-methylpentacosane, 11-methylpentacosane, (Z)-9-pentacosene, n-pentacosane, and n-hexacosane (mixture B)

The experiment is conducted in a LAB test box (36 cm x 24 cm) containing on the bottom 5 mm of wet Fontainebleau sand and is repeated three times. In the box, a matrix is placed, consisting of a foam cube in which holes are made with a diameter of 5 mm, over which a small piece of poplar wood is placed (1 cm x 2 cm x 2 cm).

The biocide used for this experiment is fipronil.

The matrix is sprayed with 5 ml of radioactive biocide. Only 4 faces are sprayed. The top and the bottom of the matrix are not treated.

In the box, an untreated piece of poplar wood is also placed in order to recreate a natural situation as exactly as possible.

The box is connected to a micro-nest also made up of an LAB test box (12 cm x 9 cm) containing on the bottom 5 cm of wet Fontainebleau sand.

The experimental arrangement may be diagrammed as follows:

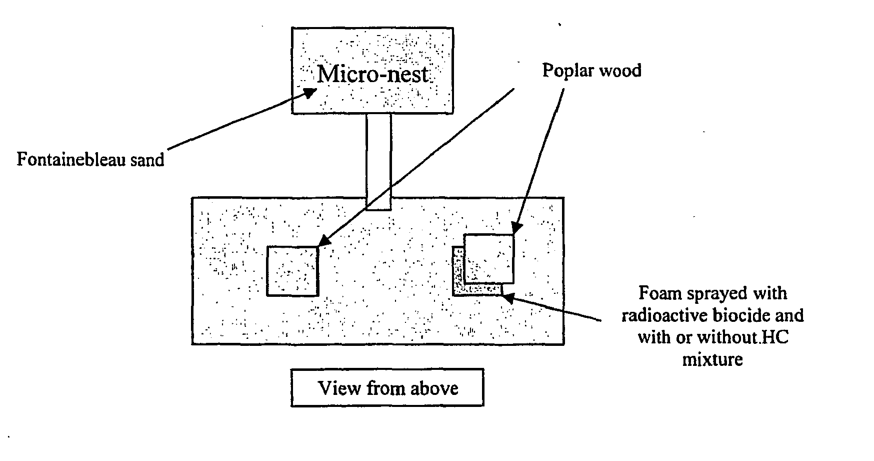

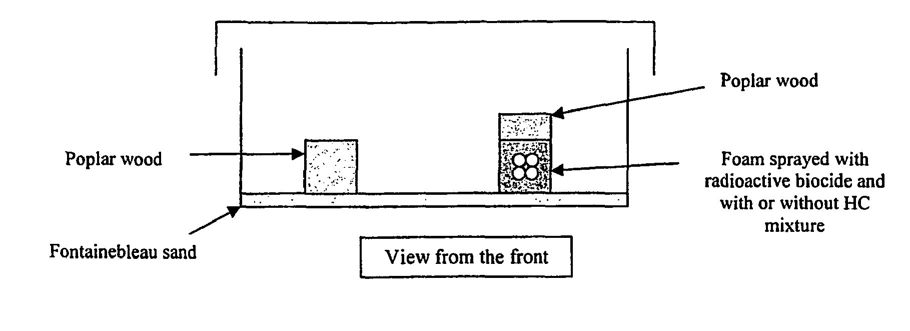

Six experiments have been conducted in total: .
- 3 experiments are conducted without spraying the matrix, in addition to the radioactive biocidal product, with the hydrocarbon compound mixture; and
- 3 experiments are conducted by spraying on the matrix, in addition to the radioactive biocidal product, a mixture of hydrocarbon compounds including 11.4% in weight of 5-methylpentacosane, 36.3% in weight of 11-methylpentacosane, 19.6% in weight of (Z)-9-pentacosene, 27.7% in weight of n-pentacosane and 5% in weight of n-hexacosane.

1,000 worker termites of the *Reticulitermes santonensis* type are placed in the micro-nest which is closed for 5 days in order to deprive the termites of food and make them used to the artificial environment of the micro-nest. Then the micro-nest is opened and the termites have access to the box containing the matrix. During these experiments, 50 termites are taken from the micro-nest every 24 hours (from the opening of the micro-nest) and are crushed directly into the scintillation liquid. The radioactivity of the solution obtained is then measured.

The results obtained are summarised in the graph below (where -HC means that radioactivity was measured in the tests in which the matrix was not sprayed with the mixture of hydrocarbon compounds to be tested and +HC means that the radioactivity was measured in the tests in which the matrix was sprayed with the hydrocarbon compound mixture to be tested). The higher the radioactivity observed, the more biocidal material was absorbed by the termites and the better the transmission was to the other members of the colony.

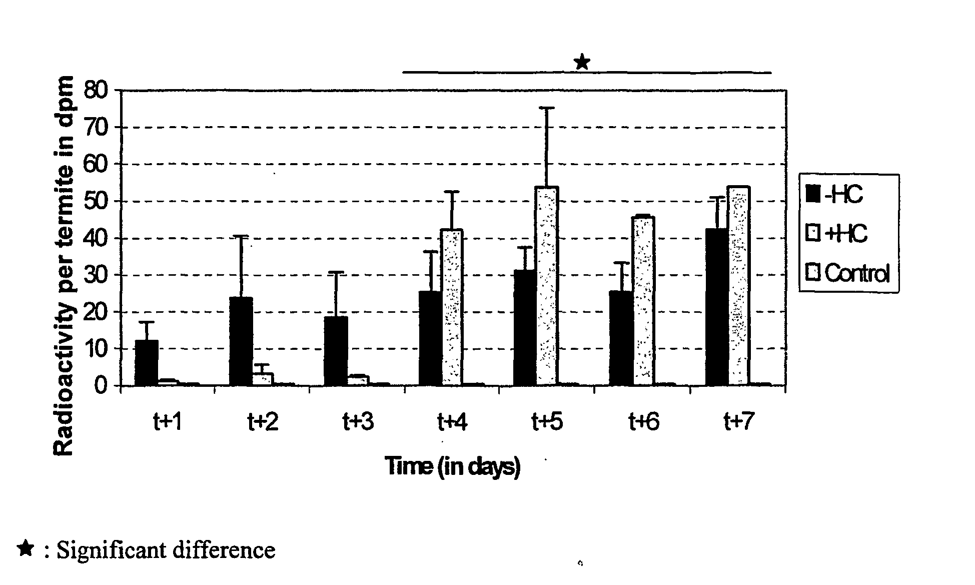

These results show a spreading of the biocide material between the various members of the termite colony clearly improved by the addition of the hydrocarbon compound mixture tested starting 4 days after the opening of the micro-nest.

### Example 4 : Demonstration of the insecticidal activity of a composition including a hydrocarbon compound mixture (11.4% in weight of 5-methylpentacosane; 36.3% in weight of 11-methylpentacosane; 19.6% in weight of (Z)-9-pentacosene; 27.7% in weight of n-pentacosane, and 5% in weight of n-hexacosane) and an insecticide compound (fipronil)

The experiment is conducted in a LAB test box (6 cm x 9 cm) containing on the bottom 2 mm of wet Fontainebleau sand and is repeated five times. In the box, a matrix is placed, consisting of a foam cube in which holes are made with a diameter of 5 mm, over which a small piece of poplar wood is placed (1 cm x 2 cm x 2 cm). The foam is impregnated with cold fipronil. The matrix is sprayed with a hydrocarbon compound mixture including 11.4% of 5-methylpentacosane; 36.3% of 11-methylpentacosane; 19.6% of (Z)-9-pentacosene; 27.7% of n-pentacosane, and 5% of n-hexacosane. Only 4 faces are sprayed. The top and the bottom of the matrix are not treated.

In the box, an untreated piece of poplar wood is also placed in order to recreate a natural situation as exactly as possible.

100 worker termites of *Reticulitermes santonensis* type are placed in the box and their mortality after 3 days is evaluated. Various concentrations of cold fipronil are tested : 0.5 ppm, 1 ppm, 2 ppm, 5 ppm, and 7 ppm. The results obtained are summarised in the table below :

| **Sample tested** | **Trial number** | **Number of termites dead after 3 days** |
|---|---|---|
| Test | Trial 1 | 0 |
| | Trial 2 | 0 |
| | Trial 3 | 0 |
| | Trial 4 | 0 |
| | Trial 5 | 0 |
| | **Average** | **0** |
| Fipronil at 0.5 ppm | Trial 1 | 0 |
| | Trial 2 | 0 |
| | Trial 3 | 0 |
| | Trial 4 | 0 |
| | Trial 5 | 0 |
| | **Average** | **0** |
| Fipronil at 1 ppm | Trial 1 | 0 |
| | Trial 2 | 0 |
| | Trial 3 | 0 |
| | Trial 4 | 0 |
| | Trial 5 | 0 |
| | **Average** | **0** |
| Fipronil at 2 ppm | Trial 1 | 20 |
| | Trial 2 | 25 |
| | Trial 3 | 32 |
| | Trial 4 | 14 |
| | Trial 5 | 9 |
| | **Average** | **20** |
| Fipronil at 5 ppm | Trial 1 | 42 |
| | Trial 2 | 45 |
| | Trial 3 | 59 |
| | Trial 4 | 56 |
| | Trial 5 | 50 |
| | **Average** | **50.4** |
| Fipronil at 7 ppm | Trial 1 | 60 |
| | Trial 2 | 42 |
| | Trial 3 | 55 |
| | Trial 4 | 34 |
| | Trial 5 | 63 |
| | **Average** | **50.8** |

These results show an insecticidal activity of the composition including fipronil with the hydrocarbon compound mixture (11.4% of 5-methylpentacosane; 34.2% of 11-methylpentacosane; 19.6% of (Z)-9-pentacosene; 27.7% of n-pentacosane, and 5% of n-hexacosane) that, at certain doses, allows destroying more than half of the termite colony in three days.

## Claims

1. Method to fight against termites comprising the use of a hydrocarbon compound mixture chosen among alkanes and alkenes comprising from 20 to 40 carbon atoms.

2. Method according to claim 1, **characterized in that** the alkanes and alkenes comprise from 23 to 35 carbon atoms.

3. Method according to claim 2, **characterized in that** the alkanes and alkenes comprise from 25 to 27 carbon atoms.

4. Method according to claim 3, **characterized in that** the alkalies and alkenes are chosen from the group comprising 19-methyltetracosane, 5-methylpentacosane, 11-methylpentacosane, (Z)-9-pentacosene, n-pentacosane, n-hexacosane, 5,17-dimethylpentacosane, and 5-methyltetracosane.

5. Method according to claim 4, **characterized in that** the hydrocarbon compound mixture comprises 11-methylpentacosane, (Z)-9-pentacosene, and n-pentacosane.

6. Method according to claim 5, **characterized in that** the hydrocarbon compound mixture is as follows:
- 11-methylpentacosane in a proportion ranging from 36 to 51% in weight;
- (Z)-9-pentacosene in a proportion ranging from 16 to 31% in weight; and
- n-pentacosane in a proportion ranging from 26 to 41% in weight.

7. Method according to claim 4, **characterized in that** the hydrocarbon compound mixture comprises 5-methylpentacosane, 11-methylpentacosane, (Z)-9 pentacosene, n-pentacosane, and n-hexacosane.

8. Method according to claim 7, **characterized in that** the hydrocarbon compound mixture is as follows:
- 11-methylpentacosane in a proportion ranging from 29 to 43% in weight;
- (Z)-9-pentacosene in a proportion ranging from 12 to 27% in weight;
- n-pentacosane in a proportion ranging from 20 to 35% in weight; and
- n-hexacosane in a proportion ranging from 1 to 14% in weight.

9. Method according to claim 4, **characterized in that** the hydrocarbon compound mixture comprises 11-methyyltetracosane, 5-methylpentacosane, 11-methylpentacosane, (Z)-9-pentacosene, n-pentacosane, n-hexacosane, 5,17-dimethylpentacosane, and 5-methyltetracosane.

10. Method according to claim 9, **characterized in that** the hydrocarbon compound mixture is as follows:
- 11-methyltetracosane in a proportion ranging from 0.1 to 10% in weight;
- 5-methylpentacosane in a proportion ranging from 3 to 18% in weight;
- 11 -methylpentacosane in a proportion ranging from 27 to 41 % in weight;
- (Z)-9-pentacosene in a proportion ranging from 11 to 26% in weight;
- n-pentacosane in a proportion ranging from 19 to 33% in weight;
- n-hexacosane in a proportion ranging from 1 to 10% in weight;
- 5,17-dimethylpentacosane in a proportion ranging from 0.1 to 5% in weight; and
- 5-methyltetracosane in a proportion ranging from 0.1 to 5% in weight.

11. Mixture **characterized in that** the compounds are present in the following proportions:
- 11-methylpentacosane in a proportion ranging from 36 to 51 % in weight;
- (Z)-9-pentacosene in a proportion ranging from 16 to 31 % in weight; and
- n-pentacosane in a proportion ranging from 26 to 41 % in weight.

12. Mixture **characterized in that** the compounds are present in the following proportions:
- 5-methylpentacosane in a proportion ranging from 4 to 19% in weight;
- 11-methylpentacosane in a proportion ranging from 29 to 43% in weight;
- (Z)-9-pentacosene in a proportion ranging from 12 to 27% in weight;
- n-pentacosane in a proportion ranging from 20 to 35% in weight; and
- n-hexacosane in a proportion ranging from 1 to 10% in weight.

13. Hydrocarbon compound mixture comprising 11-methyltetracosane, 5-methylpentacosane, 11-methylpentacosane, (Z)-9-pentacosene, n-pentacosane, n-hexacosane, 5,17-dimethylpentacosane, and 5-methyltetracosane.

14. Mixture according to claim 13, **characterized in that** the compounds are present in the following proportions:
- 11-methyltetracosane in a proportion ranging from 0.1 to 10% in weight;
- 5-methylpentacosane in a proportion ranging from 3 to 18% in weight;
- 11-methylpentacosane in a proportion ranging from 27 to 41% in weight;
- (Z)-9-pentacosene in a proportion ranging from 11 to 26% in weight;
- n-pentacosane in a proportion ranging from 19 to 33% in weight;
- n-hexacosane in a proportion ranging from 1 to 10% in weight;
- 5,17-dimethylpentacosane in a proportion ranging from 0.1 to 5% in weight; and
- 5-methyltetracosane in a proportion ranging from 0.1 to 5% in weight.

15. Insecticide composition comprising a mixture according to claim 11 and fipronil or imidacloprid.

## Patentansprüche

1. Verfahren zur Bekämpfung von Termiten, bei dem man ein Kohlenwasserstoffverbindungsgemisch, ausgewält unter Alkanen und Alkenen mit 20 bis 40 Kohlenstoffatomen, verwendet.

2. Verfahren nach Anspruch 1, **dadurch gekennzeichnet, daß** die Alkane und Alkene 23 bis 35 Kohlenstoffatome aufweisen.

3. Verfahren nach Anspruch 2, **dadurch gekennzeichnet, daß** die Alkane und Alkene 25 bis 27 Kohlenstoffatome aufweisen.

4. Verfahren nach Anspruch 3, **dadurch gekennzeichnet, daß** man die Alkane und Alkene aus der Gruppe umfassend 11-Methyltetracosan, 5-Methylpentacosan, 11-Methylpentacosan, (Z)-9-Pentacosen, n-Pentacosan, n-Hexacosan, 5,17-Dimethylpentacosan und 5-Methyltetracosan auswählt.

5. Verfahren nach Anspruch 4, **dadurch gekennzeichnet, daß** das Kohlenwasserstoffverbindungsgemisch 11-Methylpentacosan, (Z)-9-pentacosen und n-Pentacosan umfaßt.

6. Verfahren nach Anspruch 5, **dadurch gekennzeichnet, daß** sich das Kohlenwasserstoffverbindungsgemisch wie folgt zusammensetzt:
- 11-Methylpentacosan in einem Anteil von 36 bis 51 Gew. -%;
- (2)-9-Pentacosen in einem Anteil von 16 bis 31 Gew.-%; und
- n-Pentacosan in einem Anteil von 26 bis 41 Gew.-%.

7. Verfahren nach Anspruch 4, **dadurch gekennzeichnet,**
**daß** das Kohlenwasserstoffverbindungsgemisch 5-Methylpentacosan, 11-Methylpentacosan, (Z)-9-Pentacosen, n-Pentacosan und n-Hexacosan umfaßt.

8. Verfahren nach Anspruch 7, **dadurch gekennzeichnet, daß** sich das Kohlenwasserstoffverbindungsgemisch wie folgt zusammensetzt:
- 5-Methylpentacosan in einem Anteil von 4 bis 19 Gew.-%;
- 11-Methylpentacosan in einem Anteil von 29 bis 43 Gew.-%;
- (Z)-9-Pentacosen in einem Anteil von 12 bis 27 Gew.-%;
- n-Pentacosan in einem Anteil von 20 bis 35 Gew.-%; und
- n-Hexacosan in einem Anteil von 1 bis 10 Gew.-%.

9. Verfahren nach Anspruch 4, **dadurch gekennzeichnet, daß** das Kohlenwasserstoffverbindungsgemisch 11-Methyltetracosan, 5-Methylpentacosan, 11-methylpentacosan, (Z)-9-Pentacosen, n-Pentacosan, n-Hexacosan, 5,17-Dimethylpentacosan und 5-Methyltetracosan umfaßt.

10. Verfahren nach Anspruch 9, **dadurch gekennzeichnet, daß** sich das Kohlenwasserstoffverbindungsgemisch wie folgt zusammensetzt,:
- 11-Methyltetracosan in einem Anteil von 0,1 bis 10 Gew.-%;
- 5-Methylpentacosan in einem Anteil von 3 bis 18 Gew.-%;
- 11-Methylpentacosan in einem Anteil von 27 bis 41 Gew.-%;
- (Z)-9-Pentacosen in einem Anteil von 11 bis 26 Gew.-%;
- n-Pentacosan in einem Anteil von 19 bis 33 Gew.-%;
- n-Hexacosan in einem Anteil von 1 bis 10 Gew.-%;
- 5,17-Dimethylpentacosan in einem Anteil von 0,1 bis 5 Gew.-%; und
- 5-Methyltetracosan in einem Anteil von 0,1 bis 5 Gew.-%.

11. Gemisch, **dadurch gekennzeichnet, daß** die Verbindungen in den folgenden Anteilen vorliegen:
- 11-Methylpentacosan in einem Anteil von 36 bis 51 Gew.-%;
- (Z)-9-Pentacosen in einem Anteil von 16 bis 31 Gew.-%; und
- n-Pentacosan in einem Anteil von 26 bis 41 Gew.-%.

12. Gemisch, **dadurch gekennzeichnet, daß** die Verbindungen in den folgenden Anteilen vorliegen:
- 5-Methylpentacosan in einem Anteil von 4 bis 19 Gew.-%;
- 11-Methylpentacosan in einem Anteil von 29 bis 43 Gew.-%;
- (Z)-9-Pentacosen in einem Anteil von 12 bis 27 Gew.-%;
- n-Pentacosan in einem Anteil von 20 bis 35 Gew.-%; und
- n-Hexacosan in einem Anteil von 1 bis 10 Gew.-%.

13. Kohlenwasserstoffverbindungsgemisch, umfassend 11-Methyltetracosan, 5-Methylpentacosan, 11-Methylpentacosan, (Z)-9-Pentacosen, n-Pentacosan, n-Hexacosan, 5,17-Dimethylpentacosan und 5-Methyltetracosan .

14. Gemisch nach Anspruch 13, **dadurch** gekennzeichet, daß die Verbindungen in den folgenden Anteilen vorliegen:
- 11-Methyltetracosan in einem Anteil von 0,1 bis 10 Gew.-%;
- 5-Methylpentacosan in einem Anteil von 3 bis 18 Gew.-%;
- 11-Methylpentacosan in einem Anteil von 27 bis 41 Gew.-%;
- (Z)-9-Pentacosen in einem Anteil von 11 bis 26 Gew.-%;
- n-Pentacosan in einem Anteil von 19 bis 33 Gew.-%;
- n-Hexacosan in einem Anteil von 1 bis 10 Gew.-%;
- 5,17-Dimethylpentacosan in einem Anteil von 0,1 bis 5 Gew.-%; und
- 5-Methyltetracosan in einem Anteil von 0,1 bis 5 Gew.-%.

15. Insektizidzusammensetzung, umfassend ein Gemisch, nach Anspruch 11 und Fipronil oder Imidacloprid.

## Revendications

1. Procédé pour lutter contre des termites comprenant l'utilisation d'un mélange de composés hydrocarbures Choisis parmi les alcanes et alcènes comprenant de 20 à 40 atomes de carbone.

2. Procédé selon la revendication 1, **caractérisé en ce que** les alcanes et alcènes comprennent de 23 à 35 atomes de carbone.

3. Procédé selon la revendication 2, **caractérisé en ce que** les alcanes et alcènes comprennent de 25 à 27 atomes de carbone.

4. Procédé selon la revendication 3, **caractérisé en ce que** les alcanes et alcènes sont choisis dans le groupe comprenant le 11-méthyltétracosane, le 5-méthylpentacosane, le 11-méthylpentacosane, le (*Z*)-9-pentacosène, le *n*-pentacosane, le *n-*hexacosane, le 5,17-dimétylpentacosane et le 5-méthyltétracosane.

5. Procédé selon la revendication 4, **caractérisé en ce que** le mélange de composés hydrocarbures comprend du 11-méthylpentacosane, du (*Z*)-9-pentacosène et du *n-*pentacosane.

6. Procédé selon la revendication 5, **caractérisé en ce que** le mélange de composés hydrocarbures est le suivant :
- du 11-méthylpentacosane en une proportion allant de 36 à 51 % en poids;
- du (*Z*)-9-pentacosène en une proportion allant de 16 à 31 % en poids; et
- du *n-*pentacosane en une proportion allant de 26 à 41 % en poids

7. Procédé selon la revendication 4, **caractérisé en ce que** le mélange de composés hydrocarbures comprend du 5-méthylpentacosane, du 11-méthylpentacosane, du (*Z*)-9-pentacosène, du *n*-pentacosane et du *n*-hexacosane.

8. Procédé selon la revendication 7, **caractérisé en ce que** le mélange de composés hydrocarbures est le suivant :
- du 5-méthylpentacosane en une proportion allant de 4 à 19 % en poids ;
- du 11-méthylpentacosane en une proportion allant de 29 à 43 % en poids ;
- du (*Z*)-9-pentacosène en une proportion allant de 12 à 27% en poids;
- du *n-*pentacosane en une proportion allant de 20 à 35 % en poids; et
- du *n*-hexacosane en une proportion allant de 1 à 10 % en poids.

9. Procédé selon la revendication 4, **caractérisé en ce que** le mélange de composés hydrocarbures comprend du 11-méthyltétracosane, du 5-méthylpentacosane, du 11-méthylpentacosane, du (*Z*)-9-pentacosène, du *n-*pentacosane, du *n-*hexacosane, du 5,17-diméthylpentacosane et du 5-méthyltétracosane.

10. Procédé selon la revendication 9, **caractérisé en ce que** le mélange de composés hydrocarbures est le suivant :
- du 11-méthyltétracosane en une proportion allant de 0,1 à 10 % en poids ;
- du 5-méthylpentacosane en une proportion allant de 3 à 18 % en poids;
- du 11-méthylpentacosane en une proportion allant de 27 à 41 % en poids;
- du (*Z*)-9-pentacosène en une proportion allant de 11 à 26 % en poids;
- du *n-*pentacosane en une proportion allant de 19 à 33% en poids ;
- du *n*-hexacosane en une proportion allant de 1 à 10% en poids;
- du 5,17-diméthylpentacosane en une proportion allant de 0,1 à 5 % en poids ; et
- du 5-méthyltétracosane en une proportion allant de 0,1 à 5 % en poids.

11. Mélange **caractérisé en ce que** les composés sont présents dans les proportions suivantes :
- du 11-méthylpentacosane en une proportion allant de 36 à 51 % en poids ;
- du (*Z*) -9-pentacosène en une proportion allant de 16 à 31 % en poids ; et
- du *n-*pentacosane en une proportion allant de 26 à 41 % en poids.

12. Mélange **caractérisé en ce que** les composés sont présents dans les proportions suivantes :
- du 5-méthylpentacosane en une proportion allant de 4 à 19 % en poids ;
- du 11-méthylpentacosane en une proportion allant de 29 à 43 % en poids ;
- du (*Z*)-9-pentacosène en une proportion allant de 12 à 27% en poids;
- du *n-*pentacosane en une proportion allant de 20 à 35 % en poids; et
- du *n-*hexacosane en une proportion, allant de 1 à 10 % en poids.

13. Mélange de composés hydrocarbures comprenant du 11-méthyltétracosane, du 5-méthylpentacosane, du 11-méthylpentacosane, du (*Z*)-9-pentacosène, du *n-*pentacosane, du *n-*hexacosane, du 5,17-diméthylpentacosane et du 5-méthyltétracosane.

14. Mélange selon la revendication 13, **caractérisé en ce que** les composés sont présents dans les proportions suivantes :
- du 11-méthyltétracosane en une proportion allant de 0,1 à 10 % en poids ;
- du 5-méthylpentacosane en une proportion allant de 3 à 18 % en poids ;
- du 11-méthylpentacosane en une proportion allant de 27 à 41 % en poids ;
- du (*Z*)-9-pentacosène en une proportion allant de 11 à 26 % en poids ;
- du *n-*pentacosane en une proportion allant de 19 à 33 % en poids ;
- du *n-*hexacosane en une proportion allant de 1 à 10 % en poids ;
- du 5,17-diméthylpentacosane en une proportion allant de 0,1 à 5 % en poids ; et
- du 5-méthyltétracosane en une proportion allant de 0,1 à 5 % en poids.

15. Composition d'insecticide comprenant un mélange selon la revendication 11 et du fipronil ou de l'imidaclopride.
